# FASCICULE DE BREVET EUROPEEN

(11) **EP 1 345 497 B1**
(45) Date de publication et mention de la délivrance du brevet: **27.04.2011**
(21) Numéro de dépôt: 01995772.9
(22) Date de dépôt: 21.12.2001
(51) Int. Cl.: A23C 19/08

(54) **PROCEDE DE FABRICATION DE FROMAGES**
KÄSEHERSTELLUNGSVERFAHREN
CHEESE-MAKING METHOD

(30) Priorité: 26.12.2000 FR 0017061
(43) Date de publication de la demande: 24.09.2003
(73) Titulaire: FROMAGERIES BEL, 75008 Paris (FR)
(72) Inventeur: CHOULET, Alain, F-41100 Vendôme (FR); GAULIER, Jean-Paul, F-39570 Montmorot (FR)
(74) Mandataire: Neyret, Daniel Jean Marie
(86) Numéro de dépôt international: PCT/FR2001/004172
(87) Numéro de publication internationale: WO 2002/051256

(56) Documents cités:
- EP-A- 0 278 179
- EP-A- 0 815 737
- EP-A- 0 880 901
- FR-A- 2 715 271
- US-A- 3 692 630
- PATENT ABSTRACTS OF JAPAN vol. 014, no. 220 (C-0717), 10 mai 1990 (1990-05-10) & JP 02 053439 A (SNOW BRAND MILK PROD CO LTD), 22 février 1990 (1990-02-22) & DATABASE WPI Derwent Publications Ltd., London, GB; AN 1990-103080
- PATENT ABSTRACTS OF JAPAN vol. 013, no. 589 (C-670), 25 décembre 1989 (1989-12-25) & JP 01 247033 A (SNOW BRAND MILK PROD CO LTD), 2 octobre 1989 (1989-10-02) & DATABASE WPI Derwent Publications Ltd., London, GB; AN 1989-329983
- DATABASE WPI Section Ch, Week 198133 Derwent Publications Ltd., London, GB; Class D13, AN 1981-60124D XP002178170 & SU 784 856 A (MOSC MOLOKO PROD), 7 décembre 1980 (1980-12-07)
- DATABASE WPI Section Ch, Week 199333 Derwent Publications Ltd., London, GB; Class D13, AN 1993-263965 XP002178171 & SU 1 757 570 A (UGLICH RES PRODN ASSOC), 30 août 1992 (1992-08-30)

## Description

L'invention concerne un procédé de fabrication de nouveaux produits fromagers par traitement d'une matière de départ consistant en un mélange d'au moins deux fromages dont un fromage fondu et les produits obtenus par ce procédé.

On connaît déjà des produits fromagers obtenus par traitement de matières premières issus du traitement du lait.

La famille la plus représentative de cette catégorie de produits est celle des fromages fondus, ces derniers étant obtenus par broyage de toute catégorie de fromages issus du lait, plus spécifiquement les fromages à pâte pressée, mélange avec d'autres matières premières laitières (poudre de lait) partiellement ou totalement écrémée, beurre, matière grasse anhydre, concentrés protéiques , etc.) en quantité variable selon le type de produits finis que l'on veut obtenir, incorporation éventuelle audit mélange de sels de fonte choisis dans la famille des polyphosphates, orthophosphates ou citrates de sodium, potassium, calcium, puis traitement thermique du mélange à des températures comprises entre 80 et 140°C pendant une durée allant de quelques secondes à plusieurs minutes selon la température utilisée.

Toutefois, un tel procédé conduit à un type de fromages qui, malgré une valeur nutritionnelle équivalente aux produits mis en oeuvre, une possibilité de présentations variées (portions, tranches, blocs, etc.) et une excellente conservation (supérieure à celle du produit initial), diffèrent totalement du produit d'origine aussi bien par leurs textures (réalisation d'une émulsion homogène), que par leur goût (perte aromatique due au traitement thermique, perception aromatique différente du fait de la formulation et des modifications structurales des produits).

On peut également citer le procédé décrit dans la demande de brevet WO 95/19 669 qui concerne un traitement de fromages à pâte pressée cuite, déclassés ou en morceaux, le procédé décrit consistant à diviser la matière première en morceaux de forme régulière, à soumettre le fromage divisé sans adjonction d'eau ni d'aucun autre ingrédient à des opérations de malaxage et de cisaillement contrôlée et à une cuisson à une température comprise entre 70 et 80°C, de préférence dans un appareil de type cuiseur-extrudeur. Toutefois, les températures utilisées dans ce procédé ne sont pas sans conséquence sur l'état des protéines qu'elles déstructurent et entraînent une perte aromatique.

Par ailleurs, le procédé s'applique à une catégorie particulière de fromages, à savoir les fromages à pâte pressée cuite, avec un matériel particulier (cuiseur-extrudeur) sous des conditions d'utilisation précises (températures supérieures à 70°C).

Or, les travaux réalisés par les inventeurs auteurs de la présente invention ont montré que des traitements thermiques supérieurs à la température de pasteurisation, soit supérieurs à 70°C, entraînent une dénaturation du produit. A ces températures, la texture des produits est plus proche en terme de rhéologie de celle d'un fromage fondu que de celle d'un fromage naturel.

Ainsi, pour des fromages fondus, l'analyse du taux de peptisation traduisant un changement de structure de protéines au cours du procédé, mesuré par le taux d'azote non sédimentable lié à la libération des protéines solubles au cours du traitement de fabrication, indique une valeur comprise entre 40 et 50 lorsque le traitement thermique est supérieur à 100°C alors que ces valeurs sont proches de 0 pour des fromages n'ayant subi aucun traitement.

Afin d'éviter les inconvénients de modification de texture et de goût des fromages liés à des traitements thermiques élevés, les auteurs de la présente invention ont proposé de traiter des fromages à des températures inférieures à la température de pasteurisation, afin de réaliser des nouveaux produits ayant une texture et un goût proches des produits de départ.

On peut citer EP 260 194 qui décrit la réalisation d'un produit fromager par traitement mécanique à une température comprise entre 40 et 50°C d'un fromage à pâte pressée ayant un extrait sec d'au moins 50 %, auquel on rajoute un agent émulsifiant notamment des protéines de sérum pour résoudre le problème de la tenue de l'émulsion. Le procédé décrit est toutefois limité à des traitements de fromages ayant un extrait sec supérieur à 50%

La demanderesse a elle-même proposé dans FR 2 778 821 de traiter une matière première constituée d'un fromage ayant un extrait sec d'au moins 40 %, à laquelle est appliqué un traitement mécanique et thermique de type pétrissage, la température étant d'au plus 65°C. Le document décrit qu'on peut rajouter au fromage une quantité d'eau d'au moins 7 %, et d'au plus 20 % en poids.

Toutefois, ce procédé s'applique plus particulièrement au traitement de pâtes pressées et ne peut s'appliquer, en tout état de cause, à des fromages à pâte molle ou des fromages frais du fait de la plus faible teneur en extrait sec conduisant à la destruction de la structure de la pâte et aux difficultés de restructuration.

Par ailleurs, si les traitements mentionnés ci-dessus s'appliquent sans problème aux fromages à pâte pressée qui se caractérisent par des extraits secs élevés et des pâtes fromagères minéralisées et de bonne cohésion, ils ne peuvent s'appliquer à des fromages d'autres catégories tels que les fromages à pâte molle ou les fromages frais à extrait sec plus faible (inférieurs à 45-50%), peu minéralisés et de faible cohésion.

En effet, le traitement de fromages selon les procédés désignés ci-dessus conduit à de la "bouillie" ou des textures de type "semoule", et il est impossible de restructurer la pâte sans l'intervention d'agents émulsifiants.

Certains auteurs se sont attachés à résoudre ce problème par traitement d'un mélange de fromages d'origines différentes.

On peut ainsi citer le brevet EP 535 728 qui décrit la réalisation de produits fromagers obtenus par traitement d'un mélange de matières premières d'origine différentes à une température inférieure à la température de pasteurisation, soit 35 à 65°C. Le mélange est constitué de 30 à 90 % de fromage non affiné ayant un extrait sec supérieur à 40 % et d'une pâte à base de fromages affinés tels que le cheddar et/ou d'une autre source protéique (concentrés protéiques laitiers où des concentrés aromatiques de fromage), cette deuxième source devant apporter le goût au produit fini. Toutefois les produits obtenus notamment ceux obtenus à partir de la mise en oeuvre de matières premières humides ou de formules à quantité d'eau importante présentent des textures non homogènes de type « semoule » du fait de la quantité relativement importante de fromage non affiné utilisé.

Afin de résoudre le problème de la texture "semoule" dès produits finis, les auteurs de EP 948 897 décrivent un traitement à des températures inférieures à la température de pasteurisation (20-65°C) d'un mélange constitué d'un fromage affiné et d'un fromage non affiné, la proportion de fromages affinés étant supérieure à 30%. Toutefois, l'objectif de ce procédé est la fabrication de fromages à tartiner et non de fromages à pâte ferme et élastique pouvant être découpés, croqués, tranchés , etc.

Ces deux derniers procédés concernent, de manière générale des traitements à des températures inférieures à la température de pasteurisation de produits fromagers d'un mélange de fromages naturels obtenus à partir de lait, plus spécifiquement de fromages affinés ayant un extrait sec supérieur à 50 % et de fromages frais (extrait sec supérieur à 40%) ou peu affinés avec comme objectif de reproduire dans le produit fini des caractéristiques organoleptiques (goût en particulier) s'approchant de celles des fromages affinés utilisés.

Aucun des procédés cités ci-dessus n'a envisagé de réaliser un traitement du type décrit précédemment d'un mélange comportant des fromages fondus malgré les avantages au niveau bactériologique et organoleptique (palette de goût) tout en conférant au produit fini une texture élastique, malléable mais suffisamment ferme pour qu'il puisse être tranché ou croqué, telle qu'on la rencontre dans les fromages naturels, notamment les fromages à pâte pressée.

De façon inattendue, les auteurs de la présente invention ont montré qu'en mélangeant au moins un fromage fondu ou une préparation fondue obtenu(e) par la fonte de fromages avec au moins un fromage "naturel" ayant un extrait sec supérieur à 45 %, la proportion pondérale de fromage fondu étant d'au moins 10 %, et en traitant mécaniquement sous faible cisaillement le mélange obtenu à une température inférieure à la température de pasteurisation, on obtenait de nouveaux produits à texture homogène, élastique, souple, agréable, pouvant présente des caractéristiques organoleptiques (goût , arôme,) proches de l'une ou de l'autre des matières premières de départ.

Par ailleurs, l'utilisation de fromage fondu ou de préparation fondue dans le mélange à traiter possède des avantages indéniables sur le plan de la sécurité alimentaire et de la conservation des produits. Ainsi, le fromage fondu obtenu par la fonte de fromages est bien plus stable que le fromage d'origine de moindre durée de conservation.

Par ailleurs, l'utilisation de fromage fondu dans la formule de départ a des avantages au niveau de la production en termes de :
- qualité des matières premières, notamment en terme de sécurité alimentaire (sécurité et stabilité bactériologiques),
- conservation versus durée de vie limitée des produits d'origine disponibilité : possibilité de report
- simplicité, praticité de mise en oeuvre (absence d'étapes de préparation).

La présente invention a ainsi pour objet un procédé de fabrication de produits fromagers ayant une flore vivante, caractérisé en ce qu'il comprend les étapes suivantes :
a) obtention d'un mélange comprenant au moins 10 % d'au moins un fromage fondu et au plus 90 % d'au moins un fromage naturel ayant un extrait sec supérieur à 45 % ;
b) traitement thermique à une température inférieure à 70°C et traitement mécanique sous faible cisaillement, pour l'obtention d'une déstructuration limitée du réseau protéique de la masse fromagère obtenue;
c) mise en forme de la masse fromagère obtenue à l'étape précédente, éventuellement avant ou après refroidissement de la masse fromagère ; et
d) conditionnement du produit obtenu.

On entend par fromages "naturels", les produits obtenus par traitement du lait, que ce dernier soit du lait de vache, de chèvre, brebis, bufflesse, etc.

Pour leur réalisation, le lait de départ est standardisé ou non en protéines et matières grasses, pasteurisé ou non et coagulé, soit par l'action d'agents coagulants tels que la présure ou ses succédanés, soit par ensemencement du lait avec des bactéries lactiques jusqu'à obtention du point isoélectrique de la caséine (pH = 4,6), soit par l'action conjuguée des deux modes précédents, égouttés, mis en forme, saumurés et éventuellement pressés et/ou affinés par action d'une flore spécifique d'affinage que l'on laisse développer dans les conditions optimales en hâloirs jusqu'à l'obtention des caractéristiques organoleptiques souhaitées.

Selon la nature du lait, le mode de coagulation, la présence ou non d'une étape d'affinage, on obtient une gamme étendue de produits de départ, que l'on classe en fromages frais (coagulation lactique, peu ou pas d'affinage, extrait sec faible (généralement inférieur à 40%), fromages à pâte molle (coagulation mixte, égouttage et éventuellement affinage, extrait sec supérieur aux précédents (supérieur à 35-40% mais généralement inférieur à 50 %) et fromages à pâte pressée (coagulation présure, pressage et souvent affinage, et extrait sec élevé, supérieur à 45%).

Par ailleurs, tous ces fromages se caractérisent par la présence de germes microbiens dans la pâte et, éventuellement en surface, dans le cas des fromages à croûte naturelle, ce qui rend ces produits "vivants", c'est-à-dire évolutifs dans le temps comme tout fromage "naturel".

Dans le cadre de l'invention, on utilisera préférentiellement comme fromages "naturels" des fromages à pâte pressée.

On entend par fromages "fondus" ou spécialités fromagères fondues, les produits obtenus par la fonte sous traitement thermique et généralement sous vide partiel de fromages en présence ou non de sels de fonte. Les matières premières utilisées sont préférentiellement des fromages à pâte pressée mais tout type de fromages naturels tels que définis ci-dessus est également approprié. On peut aussi utiliser des "caillés" à caractère présure ou lactique.

Par ailleurs, on peut ajouter à la formule de la poudre de lait écrémé ou non, du beurre, de la MGLA (matière grasse laitière anhydre), de la poudre de lactosérum, ou des concentrés protéiques sous forme liquide ou en poudre. On peut remplacer partiellement ou totalement la matière grasse laitière par de la matière grasse végétale et les protéines par des protéines végétales. La formule peut également comprendre des agents de texture tels que hydrocolloïdes. L'utilisation de ces derniers est un avantage lorsque l'on met en oeuvre des matières premières humides (faible extrait sec) pour obtenir des produits à texture très souple. La fabrication de fromage fondu est parfaitement décrite dans le livre de ECK et GILLIS J.C., A : "Le fromage", 3ème édition, Ed. Lavoisier Paris, auquel on pourra se référer pour de plus amples détails.

Dans le cadre de l'invention, on prépare selon les techniques traditionnelles le fromage fondu ou la préparation fromagère fondue par fonte de fromagers d'une seule catégorie ou d'un mélange de variétés selon les caractéristiques de goût que l'on veut obtenir.

Par ailleurs, la matière première fromagère de départ est fonction des caractéristiques organoleptiques que l'on veut conférer au fromage ou à la matière première fromagère fondue ou au produit final. Ainsi, par exemple, dans le cas où l'on veut conférer au produit final des caractéristiques organoleptiques (goût et arômes) de produits à pâte molle de type camembert, on prépare un fromage fondu à partir de la fonte de camembert.

Dans un mode préférentiel de l'invention, la matière première fromagère à fondre sera choisie dans la famille des pâtes molles à croûte naturelle, des fromages frais ou des caillés frais lactiques ou présure ou le mélange de ces composants.

On peut citer pour les fromages de départ, les fromages à pâte molle et croûte blanche tels que le Brie ou le Camembert, les fromages à pâte persillée tels que le Gorgonzola et le Roquefort, les fromages à croûte colorée tels que le Munster et le Maroilles, les fromages à pâte pressée tels que le Gouda, l'Edam, le Cantal, l'Emmental, le Maasdam et le Cheddar vieux ou jeune.

On entend par "faible cisaillement" les contraintes non supérieures à celles exercées dans un équipement de type "cutter" à des vitesses allant jusqu'à 1 200 rpm.

On peut citer par exemple les traitements réalisés dans des appareils du commerce de type cutter (par exemple ceux commercialisés sous la dénomination STEPHAN®) utilisés traditionnellement en charcuterie ou en fabrication de fromage fondu tournant à des vitesses comprises entre 250 et 1 200 rpm, avantageusement 300 et 600 rpm ; des appareils de type pétrin, mélangeur, malaxeur, cuiseur-mélangeur, co-malaxeur, extrudeur sont également appropriés.

La déstructuration du réseau protéique est mesurée par l'analyse du taux de peptisation traduisant un changement de structures des protéines au cours du traitement, celui-ci est exprimé par le taux d'azote soluble non sédimentable lié à la libération des peptides solubles au cours des traitements de fabrication. Les valeurs ne doivent pas être supérieures à 80% de la valeur initiale du mélange de fromages.

Il convient d'observer que la pâte fromagère fondue présente une déstructuration élevée de son réseau protéique par rapport au fromage d'origine dont elle est issue. De ce fait, une proportion de réseau protéique déstructurée est due à l'addition du fromage fondu et dépendra de la quantité de fromage fondu introduite dans le mélange.

Les valeurs limites de 80 % indiquées ci-dessus sont données pour la proportion de fromage autre que le fromage fondu.

Avantageusement, le mélange de départ comprend de 10 à 80 % en poids, et de préférence 10 à 50 % en poids d'au moins un fromage fondu.

On préfère également que le fromage naturel ayant un extrait sec supérieur à 45 % représente de 10 à 90 % et avantageusement de 20 à 90 % en poids du mélange de fromages.

Il est également possible d'ajouter au mélange de fromages une quantité d'eau généralement inférieure à 20 %, de façon à ajuster l'extrait sec final du produit.

Selon une autre caractéristique avantageuse du procédé de l'invention, le traitement thermique est réalisé à 70°C est maintenu pendant une durée comprise entre 30 secondes et 6 minutes. Les limites de températures indiquées ci-dessus sont données pour une pression égale ou inférieure à la pression atmosphérique.

Avantageusement, le mélange à l'étape b) est refroidi à une température inférieure à 60°C (à pression atmosphérique) à l'issue de l'étape de traitement thermique et mécanique puis mis en forme par tous moyens appropriés tels que coulage, dosage ou moulage.

En variante, le produit obtenu à l'issue des traitements mécanique et thermique peut être mis en forme par tout moyen approprié tel que mentionnés précédemment puis refroidi à une température inférieure à 60°C.

Par ailleurs, l'étape de refroidissement peut être menée en deux temps. Ainsi, à l'issue de l'étape de traitements thermique et mécanique, le produit peut être refroidi dans un premier temps à une température inférieure à 60°C puis mis en forme par tout moyen traditionnel, les deux étapes pouvant être inversées ; puis le produit obtenu peut être dans un second temps refroidi à une température inférieure à 15°C (à pression atmosphérique).

On peut également ajouter au mélange avant traitement mécanique, selon le produit final que l'on veut obtenir :
- des matières grasses sous différentes formes (beurre, matières grasses laitières anhydres, matières grasses végétales) en fonction de la teneur en matière grasse du produit final souhaité ;
- des ingrédients fonctionnels: hydrocolloïdes, etc.
- des ingrédients d'aromatisation, des inclusions sous forme d'éléments figurés, (noix, noisettes, olives, herbes ...), ou tout autre ingrédient alimentaire souhaité tels que des oligoéléments ou des vitamines.

On peut éventuellement rajouter des substances aromatisantes et ingrédients divers à ce stade de fabrication.

Le procédé selon l'invention sera mieux compris à l'aide de la description qui suit :

Dans une étape (1), on réduit la taille du(ou des) fromage(s) naturel(s) qui entrent dans le mélange de base éventuellement après écroûtage, par râpage et/ou broyage du (ou des) fromage (s) « naturels ». Les produits utilisés peuvent être hypolipidiques , hyposodés, etc. Parallèlement, le fromage fondu est découpé en cubes de 1 à 10 cm de côté ou râpé comme le fromage naturel. Le fromage fondu est avantageusement, mais non exclusivement, préparé à partir de fromages à pâte molle ou à pâte persillée, de caillés présures ou lactiques ou de fromages frais tels que la feta, etc.

Dans une étape (2), on réalise un mélangé avec les proportions souhaitées de fromage fondu en cubes (ou râpé) et de fromage « naturel » préférentiellement râpé de l'étape (1). On peut utiliser un ou plusieurs fromages « naturels » et un ou plusieurs fromages fondus dans le mélange selon les caractéristiques organoleptiques finales que l'on souhaite obtenir. Le taux dans le mélange du (ou des) fromage(s) naturel(s) est compris entre 10 et 90% en poids et celui du (ou des) fromage(s) fondu(s) est compris entre 10 et 80%, de préférence 10 à 50% en poids. On peut ajouter au mélange de fromages une quantité additionnelle d'eau afin d'ajuster l'extrait sec final de produit, cette quantité d'eau n'étant pas supérieure à 20% en poids, des matières grasses afin d'obtenir la teneur souhaitée en matières grasses dans le produit final.

On peut également ajouter au mélange de départ des éléments alimentaires figurés d'origine végétale ou animale dans une proportion de 1 à 10% en poids par rapport au poids du mélange de fromages. Ces éléments peuvent être ajoutés au moment du mélange des constituants fromagers ou après l'étape de chauffage afin de ne pas les briser. Plus avantageusement et pour des raisons de sécurité alimentaire, ils pourront être incorporés dans la préparation du fromage fondu. On peut également soumettre à l'issue de l'étape de refroidissement la pâte obtenue à un traitement de foisonnement par incorporation d'azote ou tout autre gaz compatible et approprié à l'aide d'un appareil de foisonnement usuel. Dans ce cas, on ne fait pas subir à la pâte de traitement mécanique et on la conditionne après mise en forme dans un moule ou dans l'emballage définitif. Ce traitement confère au produit une texture plus aérée.

En jouant sur la formulation lors de la préparation du fromage fondu notamment le type de fromage utilisé, le type de (ou des) fromages "naturels" employés et le rapport fromage fondu/fromage "naturel " dans le mélange, on peut obtenir une gamme étendue de produits en terme de goût, d'arôme et de texture, caractéristiques que l'on peut réguler à la demande tout en gardant des caractéristiques soit proches, soit éloignés des fromages naturels de départ.

On peut ainsi concevoir des fromages avec une texture de pâte pressée et un goût de pâte molle ou de goût frais.

On peut ainsi concevoir des fromages avec une texture de pâte pressée de type "Tomme de Savoie" et un goût de pâte molle de type Camembert, Brie ou Chèvre ou de goût frais de type "fromage en faisselles". En effet, la texture et les qualités aromatiques du fromage ne sont plus conférées par la technologie de fabrication (par exemple, pressage) ni de l'action de flore d'affinage, mais par le mélange en plus ou moins grande quantité du ou des fromages matières premières dont on veut retrouver les qualités organoleptiques (texture et/ou arômes dans le produit fini).

Ainsi, on peut fabriquer un fromage ayant à la fois une texture souple d'un fromage de type Saint Paulin en utilisant notamment un Saint Paulin jeune et peu aromatique et un goût de pâte molle à croûte lavée de type Munster en mélange au Saint Paulin jeune un fromage fondu, obtenu par la fonte d'un fromage à croûte lavée qui conférera au produit fini ses qualités de goût et d'arômes.

Dans une étape (3), on fait subir au mélange un traitement thermique à une température d'au plus 70°C et mécanique de type pétrissage. Cette étape est réalisée en soumettant le mélange à un traitement thermique doux consistant à chauffer le produit de départ à une température comprise entre 20°C et 70°C sous l'action d'un cisaillement modéré et à maintenir le mélange à cette température pendant une durée comprise entre 30 secondes et 3 minutes tout en brassant la pâte afin de réaliser un mélange homogène. Cette étape peut-être effectuée dans un cutter, pétrin ou tout autre appareil adapté (extrudeur). La vitesse de brassage dans un cutter ou pétrin est avantageusement comprise entre 250 et 1500 rpm, de préférence entre 300 et 600 rpm.

Dans une étape (4), on met en forme la pâte obtenue à l'étape (3) avant et/ou après refroidissement à une température inférieure à 60°C, selon les propriétés rhéologiques de la pâte pour la rendre apte au formage, et qui dépendent du mode de formage utilisé : dosage, coulage ou moulage classique.

Les produits sortant du dispositif de mise en forme se présentent sous des formes variables (billes, sphères, parallélépipèdes, cylindres, oeufs, cubes, etc.)

De façon avantageuse, dans la mesure où la mise en forme s'effectue par moulage classique de fromagerie, on peut faire subir au produit placé dans le moule une légère opération de pressage pour stabiliser la forme du produit.

Si l'étape de refroidissement n'a pas été réalisée avant mise en forme, elle est alors réalisée à ce stade du procédé.

Le produit est alors conditionné dans tout emballage approprié de type sachets, boîtes, coques, feuilles d'aluminium ou enrobé avec des cires de fromagerie ou des substituts de celles-ci tels que des acétoglycérides ou des enrobages comestibles.

Les produits obtenus sont de toute forme et de tout grammage. Ce dernier est avantageusement compris entre 1 et 500g. Ils présentent une texture souple, homogène, élastique que l'on peut trancher, couper voire croquer suivant le type de consommation souhaitée. Toutefois, la texture des produits obtenus ne permet pas de les tartiner. Ils peuvent être à teneur réduite en matières grasses ou en sels, enrichis en vitamines ou oligoéléments, etc. Comme les fromages "naturels", ils contiennent également des germes vivants qui continuent de se développer tout au long du cycle de commercialisation. La flore totale des produits est généralement comprise entre 10⁵ et 10⁸ bactéries /gramme de fromage selon la nature des matières premières utilisées, leur âge et la température de traitement

L'invention est illustrée par les exemples ci-après donnés à titre illustratif et non limitatif.

Pour leur compréhension, on se référera aux figures annexées sur lesquelles :
- la figure 1 représente les résultats d'analyse sensorielle de produits obtenus selon l'exemple 1 ;
- la figure 1A représente les résultats d'analyse de la texture, les résultats étant exprimés par une note allant de 0 à 6 suivant les critères suivants : pâteux, croquant, fondant, friable, ferme, élastique, souple, présence de bulles, présence de pépites ;
- la figure 1B représente les résultats d'analyse de la flaveur, les résultats étant exprimés par une note allant de 0 à 6 suivant les critères suivants : rance, grillé, présence de diacétyle, (composé aromatique laitier caractéristique de l'arôme des beurres), caractère douceâtre, amer, caractère astringent, acidité, et piquent.

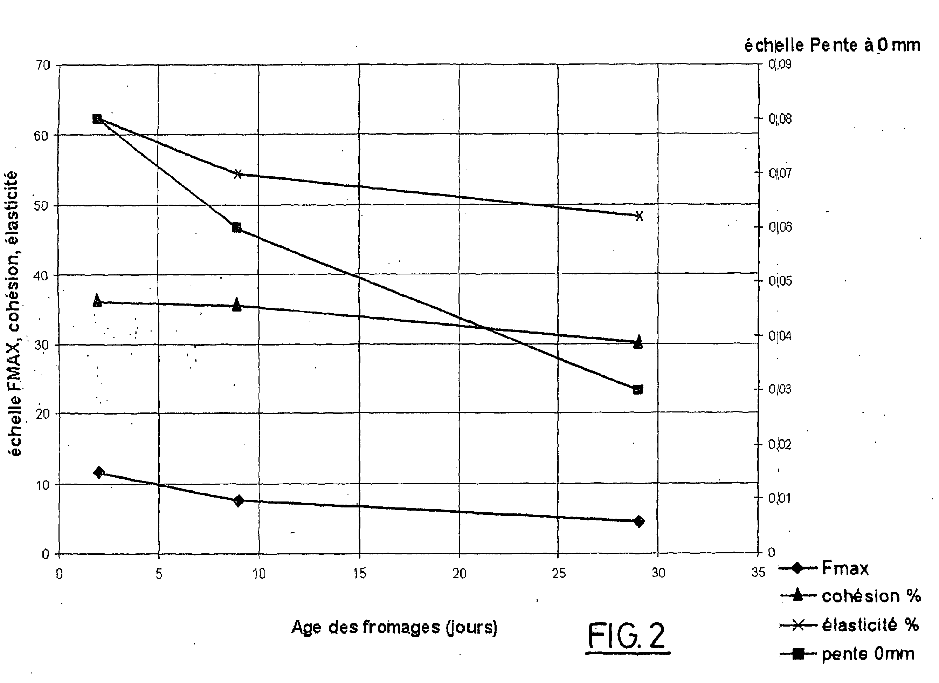

- la figure 2 représente un schéma illustrant les résultats d'analyse en double compression des produits fabriqués selon l'exemple 1, au cours des premiers stades du vieillissement ;
- la figure 3 représente un diagramme illustrant les résultats d'analyse sensoriels de produits obtenu selon l'exemple 3.
- la figure 3A représente les résultats d'analyse de la texture ;
- la figure 3B représente les résultats d'analyse de la flaveur.

### EXEMPLES

### Exemple 1 Fabrication d'un produit de petit format à la texture souple et fondante et au goût doux et crémeux, à partir d'un mélange de fromages naturels et de Camembert fondu.

On met en oeuvre la formule suivante :

**Tableau 1 : Formule destinée à la fabrication d'un produit de petit format à la texture souple et fondante.**

| Matières premières | Proportion | Préparation |
|---|---|---|
| Pâte pressée jeune de type Saint Paulin | 40 % | Râpé en brins (section 1mm*2mm) |
| Fromage Fondu obtenu par la fonte de camembert ( avec sels de fonte | 40 % | Coupé en cubés d'environ 40 mm de côté |
| Cheddar jeune | 14% | Râpé en brins |
| Matière grasse laitière anhydre | 5 % | Fondue à 46 °C |
| Eau minérale | 2 % | |
| Sel | 1 % | Dispersé dans l'eau |

Le fromage fondu est fabriqué selon les technologies connues (par exemple, cf. "le fromage", A.Eck, ed. Lavoisier).

Le mélange est introduit dans une enceinte d'agitation-mélange sous cisaillement modéré, à pression contrôlée (par exemple un cutter). Le mélange est chauffé par injection directe de vapeur, sous agitation modérée (400 tpm), jusqu'à une température de 45 à 50°C, puis maintenu à cette température de chambrage, sous agitation modérée (400 tpm), pendant 40 secondes. La pâte ainsi produite est ensuite agitée sous cisaillement réduit (200 tpm), pendant 210 secondes, l'enceinte étant maintenue sous vide partiel (0,7.10⁵ Pa).

La pâte obtenue est vidangée dans un récipient approprié et soumise à un refroidissement statique dans une enceinte de réfrigération. Une fois suffisamment raffermie, la pâte est versée dans un appareil de préformage dans lequel deux vis contrarotatives de large diamètre pressent la pâte contre un tambour ajouré, leur donnant ainsi une forme hémi-discoïdale à bord droit.

Les pièces ainsi formées, d'environ 20 g, sont ensuite pressées dans des moules adéquats, de façon à leur procurer leur forme définitive, puis refroidies dans une enceinte de réfrigération à basse température. Les produits sont démoulés à froid puis conditionnés dans un emballage étanche.

Les produits obtenus présentent une texture souple, onctueuse et légèrement fondante. Leur goût est doux et crémeux. Leurs caractéristiques physico-chimiques sont les suivantes :

**Tableau 2 : Analyses physico-chimiques des produits obtenus selon la technique présentée ci-dessus :**

| Analyses | Extrait sec | Gras sur sec | pH | NaCl |
|---|---|---|---|---|
| Produit 188-1 | 48,9 | 54,2 | 5,95 | 1,7 |

Le produit fini présente une flore totale de 5:10⁶ bactéries/g de fromage.

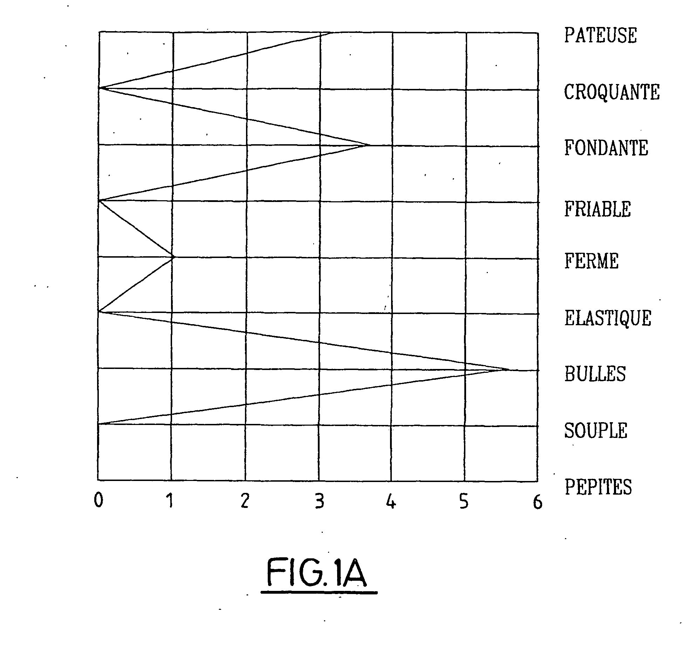

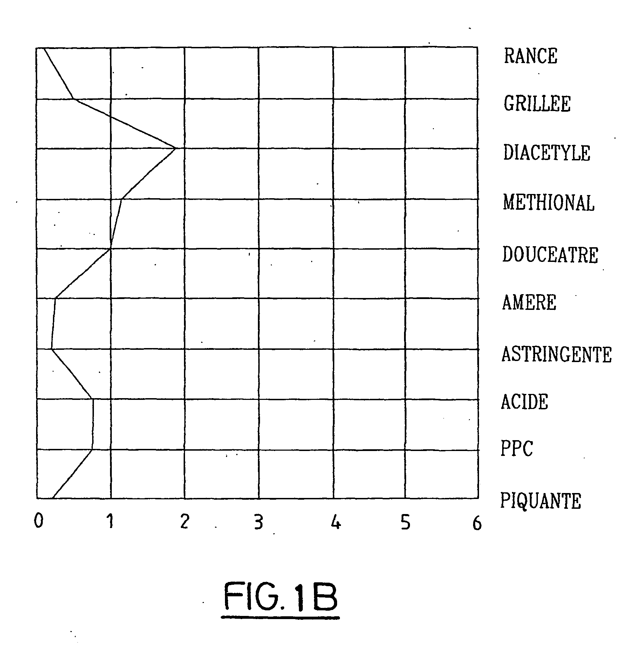

La dégustation des produits par un jury expert donne les résultats illustrés à la figure 1.

Les produits sont également analysés en double compression (appareil Instron, taux de compression de 50 %, vitesse 50 mm/min, carotte de diamètre 17 mm et hauteur 11 mm), à trois âges successifs. Les résultats suivants sont obtenus :

**Tableau 3 : Analyses en doublé compression des produits obtenus selon la technique présentée ci-dessus :**

| Les résultats sont illustrés à la figure 2. | | | | |
|---|---|---|---|---|
| Age (jours) | Fmax* (N) | pente** 0mm | Cohésion*** % | élasticité**** % |
| 2 | 11,6 | 0,08 | 36,2 | 62,2 |
| 9 | 7,57 | 0,06 | 35,6 | 54,5 |
| 29 | 4,47 | 0,03 | 30,2 | 48,3 |

| | | | | |
|---|---|---|---|---|
| * max : force maximale opposee par le fromage a la sonde lors de la première compression. ** Pente 0 mm : pente de la courbe dans les premiers instants suivant le contact sonde-fromage. *** Cohésion : rapport de l'énergie de la deuxième compression sur l'énergie de la première. **** Elasticité : pourcentage de recouvrement de la hauteur de fromage après la seconde compression. | | | | |

### Exemple 2 : Fabrication d'un produit de petit format au goût de munster, à partir d'un mélange de fromages à pâte pressée, et de Munster fondu.

On met en oeuvre la formule suivante :

**Tableau 4 : Formule destinée à la fabrication d'un produit de petit format au goût de Munster**

| Matières premières | Proportion | Préparation |
|---|---|---|
| Pâte pressés jeune de type St Paulin | 40 % | Râpé en brins (section 1mm*2mm) |
| Fondu obtenu par la fonte de Munster affiné ( avec sels de fonte) | 40 % | Coupé en cubes d'environ 40 mm de côté |
| Cheddar jeune | 14 % | Râpé en brins |
| Matière grasse laitière anhydre | 5 % | Fondue à 46 °C |
| Eau | 1 % | |

Le fromage fondu est fabriqué selon les technologies connues (par exemple, cf. "le fromage", A.Eck, ed. Lavoisier).

Le mélange est introduit dans une enceinte d'agitation-mélange sous cisaillement modéré, à pression contrôlée (par exemple un cutter). Le mélange est chauffé par injection directe de vapeur, sous agitation modérée (400 tpm), jusqu'à une température de 43 à 47°C, puis maintenu à la température de chambrage, sous brassage modérée (400 tpm), pendant 40 secondes. La pâte ainsi produite est ensuite brassée sous cisaillement réduit (200 tpm), avec refroidissement par double enveloppe, pendant 210 secondes, l'enceinte étant maintenue sous vide partiel (0,7.10⁵ Pa).

La pâte obtenue est vidangée dans un récipient approprié et laissée au repos. Une fois suffisamment raffermie, la pâte est versée dans un appareil de pré-formage dans lequel deux vis contrarotatives de large diamètre pressent la pâte contre un tambour ajouré, leur donnant ainsi une forme hémi-discoïdale à bord droit.

Les pièces ainsi formées, d'environ 20g, sont ensuite pressées dans des moules adéquats, de façon à leur procurer leur forme définitive, puis refroidies dans une enceinte de réfrigération à basse température. Les produits sont démoulés à froid puis conditionnés dans un emballage étanche.

Les produits obtenus présentent une texture souple et légèrement pâteuse, et un goût franc de Munster. Ses caractéristiques physico-chimiques sont les suivantes :

**Tableau 5 : Analyses physico-chimiques des produits obtenus selon la technique présentée ci-dessus :**

| Analyses | Extrait sec | Gras sur sec | pH | NaCl |
|---|---|---|---|---|
| Produit | 50.1 | 54 | 6,01 | 2,1 |

### Exemple 3 : Fabrication d'un produit de petit format au goût fruité, à partir d'un mélange de fromages à pâte pressée semi-cuite et fermentation propionique, et de fromage à pâte pressée jeune fondu.

On met en oeuvre la formule suivante :

**Tableau 6 : Formule destinée à la fabrication d'un produit de petit format au goût de type pâte pressée cuite.**

| Matières premières | proportion | Préparation |
|---|---|---|
| Maasdam | 85% | Râpé en brins (section 1mm*2mm) |
| Fondu de fromage à pâte pressée non affiné | 15 % | Râpé en brins (section 1 mm*2mm) |

Le fromage fondu est réalisé dans un appareil de type cuiseur extrudeur, sans ajout d'ingrédients fonctionnels.

Le mélange est introduit dans une enceinte d'agitation-mélange sous cisaillement modéré, à pression contrôlée (par exemple un cutter). Le mélange est chauffé par injection directe de vapeur, sous brassage modéré (450 tpm), jusqu'à une température de 54 à 58°C, puis maintenu à cette température de chambrage, sous brassage modéré (450 tpm), pendant 40 secondes. La pâte ainsi produite est ensuite agitée sous cisaillement réduit (200 tpm), pendant 120 secondes, l'enceinte étant maintenue sous vide partiel (0,7.10⁵ Pa).

La pâte obtenue est versée dans un appareil de pré-formage dans lequel deux vis contrarotatives de large diamètre pressent la pâte contre un tambour ajouré, leur donnant ainsi une forme hémi-discoïdale à bord droit.

Les pièces ainsi formées, d'environ 20g, sont ensuite pressées dans des moules adéquats, de façon à leur procurer leur forme définitive, puis refroidies dans une enceinte de réfrigération basse température. Les produits sont démoulés à froid puis conditionnés dans un emballage étanche.

Les produits obtenus présentent une texture assez ferme, moyennement élastique, croquante, très peu fondante, et ni collante, ni pâteuse. Leur goût est essentiellement de type pâte pressée cuite, et légèrement grillé et lactique: Ses caractéristiques physico-chimiques sont les suivantes :

**Tableau 7 : Analyses physico-chimiques des produits obtenus selon la technique présentée ci-dessus :**

| Analyses | Extrait sec | Gras sur sec | pH | NaCl |
|---|---|---|---|---|
| Produit 201-2 | 53,1 | 47,5 | 5,76 | 1,5 |

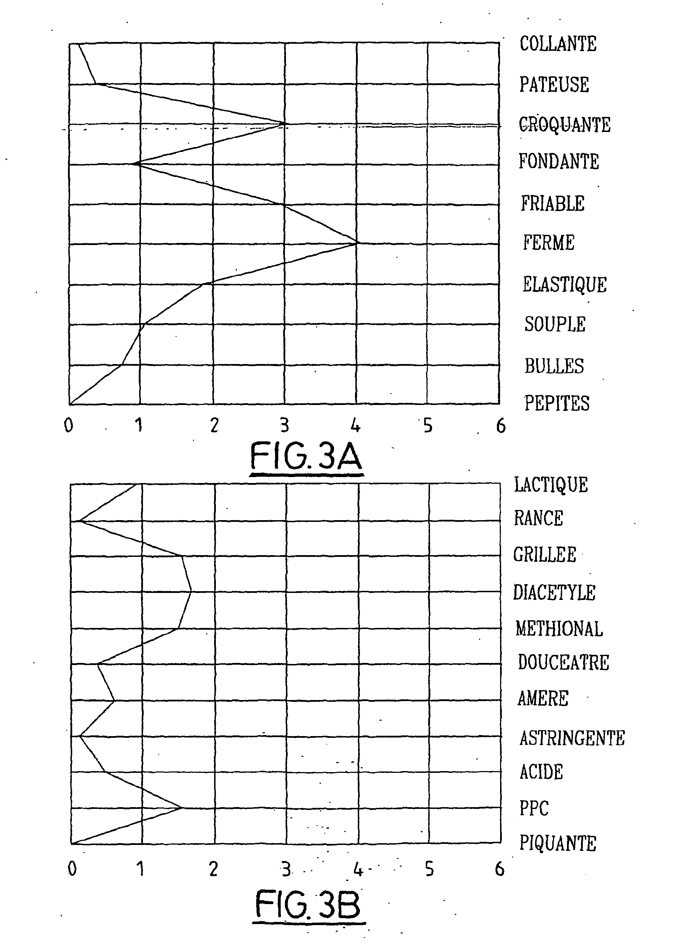

La dégustation des produits par un jury expert donne les résultats illustrés à la figure 3, l'analyse est exprimée sous forme de notation de 0 à 6 suivant différents paramètres comme pour la figure 1.

### Exemple 4 : Fabrication d'un produit de petit format au goût crémeux, à partir de fromages à pâte pressée et de fromage frais-fondu.

On met en oeuvre la formule suivante :

**Tableau 8 : Formule destinée à la fabrication d'un produit de petit format à la texture souple et fondante**

| Matières premières | proportion | Préparation |
|---|---|---|
| Gouda | 80% | Râpé en brins (section 1 mm*2mm) |
| Fromage frais-fondu | 20 % | Coupé en cubes d'environ 40 mm de côté |

Le fromage frais-fondu est fabriqué selon les technologies traditionnelles à partir de caillé (par exemple, cf. "le fromage", A.Eck, ed. Lavoisier), et conditionné en gros volume.

Le mélange est introduit dans une enceinte d'agitation-mélange sous cisaillement modéré, à pression contrôlée (par exemple un cutter). Le mélange est chauffé par injection directe de vapeur, sous brassage modéré (400 tpm), jusqu'à une température de 52 à 56°C, pendant 50 secondes, puis maintenu à la température de chambrage, sous brassage modéré (400 tpm), pendant 40 secondes. La pâte ainsi produite est ensuite agitée sous cisaillement réduit (200 tpm), pendant 300 secondes, l'enceinte étant maintenue sous vide partiel (0,7.10⁵ Pa).

La pâte obtenue est versée dans un appareil de préformage dans lequel deux vis contrarotatives de large diamètre pressent la pâte contre un tambour ajouré, leur donnant ainsi une forme hémi-discoïdale à bord droit.

Les pièces ainsi formées, d'environ 20g, sont ensuite pressées dans des moules adéquats, de façon à leur procurer leur forme définitive, puis refroidies dans une enceinte de réfrigération basse température. Les produits sont démoulés à froid puis conditionnés dans un emballage étanche.

Les produits obtenus présentent une texture modérément ferme, et légèrement fondante et pâteuse. Leur goût est doux, crémeux, lactique et légèrement acide. Ses caractéristiques physico-chimiques sont les suivantes :

**Tableau 9 : analyses physico-chimiques des produits obtenus selon la technique présentée dans l'exemple 4 :**

| Analyses | Extrait sec | Gras sur sec | pH | NaCl |
|---|---|---|---|---|
| Produit | 51,5 | 53,5 | 5,7 | 1,5 |

### Exemple 5 : Fabrication d'un produit de petit format allégé à goût de type Edam.

On met en oeuvre la formule suivante :

**Tableau 10 : Formule destinée à la fabrication d'un produit de petit format allégé à goût de type Edam.**

| Matières premières | Proportion | Préparation |
|---|---|---|
| Edam affiné allégé (32% de G/S) | 68 % | Râpé en brins (section 1mm x 2mm) |
| Fondu de pâte pressée à bas taux de matière grasse (20% de G/S) | 26 % | Râpé en brins (section 1mm x 2mm) |
| Quark (0% G/S) | 4% | Incorporer parmi les grains de fromage râpé |
| Eau | 2 % | |

Le fromage fondu est réalisé selon les technologies traditionnellement employées, afin notamment d'accroître l'aptitude au mélange du fromage à pâte pressé à bas taux de matière grasse (G/S ∼20%, ES -40).

Le mélange est introduit dans une enceinte d'agitation-mélange sous cisaillement modéré, à pression contrôlée (par exemple un cutter). Le mélange est chauffé par injection directe de vapeur, sous agitation, jusqu'à une température de 48 à 56°C, puis maintenu à la température de chambrage, sous agitation modérée, pendant 40 secondes. La pâte ainsi obtenue est ensuite agitée sous cisaillement réduit, pendant 300 secondes, l'enceinte étant maintenue sous vide partiel (0,7.10⁵ Pa).

La pâte obtenue est versée dans un appareil de pré-formage dans lequel deux vis contrarotatives de large diamètre pressent la pâte contre un tambour ajouré, leur donnant ainsi une forme hémi-discoïdale à bord droit.

Les pièces ainsi formées, d'environ 20g, sont ensuite pressées dans des moules adéquats, de façon à leur procurer leur forme définitive, puis refroidies dans une enceinte de réfrigération basse température. Les produits sont démoulés à froid puis conditionnés dans un emballage étanche.

Les produits obtenus présentent une texture assez souple et très légèrement granuleuse. Leur goût est doux, se rapprochant de celui d'une pâte pressée cuite et lactique. Ses caractéristiques physico-chimiques sont les suivantes :

**Tableau 11 : Analyses physico-chimiques des produits obtenus selon la technique présentée dans l'exemple 6 :**

| Analyses | Extrait sec | Gras sur sec | pH | NaCl |
|---|---|---|---|---|
| Produit | 44 | 28,9 | 5,6 | 1,6 |

## Revendications

1. Procédé de fabrication de produits fromagers ayant une flore vivante, **caractérisé en ce qu'**il comprend les étapes suivantes :
a) obtention d'un mélange comprenant au moins 10 % d'au moins un fromage fondu et au moins un fromage naturel ayant un extrait sec supérieur à 45 %, la proportion du fromage naturel étant d'au plus 90 % ;
b) traitement thermique à une température inférieure à 70°C et traitement mécanique sous faible cisaillement, pour l'obtention d'une déstructuration limitée du réseau protéique de la masse fromagère obtenue ;
c) mise en forme de la masse fromagère obtenue à l'étape précédente, éventuellement avant ou après refroidissement de la masse fromagère ; et
d) conditionnement du produit obtenu.

2. Procédé selon la revendication 1, **caractérisé en ce que** le mélange comprend de 10 à 90 %, avantageusement de 10 à 50 % en poids d'au moins un fromage fondu.

3. Procédé selon la revendication 1, **caractérisé en ce que** le mélange comprend de 10 à 90 %, avantageusement de 20 à 90 % en poids d'au moins un fromage naturel ayant un extrait sec supérieur à 45 %.

4. Procédé selon l'une des revendications 1 à 3, **caractérisé en ce que** le mélange comprend de 0 à 20 % en poids d'eau ajoutée.

5. Procédé selon l'une des revendications 1 à 4, **caractérisé en ce que** le traitement mécanique est réalisé dans un appareil de type cutter avec une vitesse de brassage comprise entre 250 et 1200 rpm, de préférence 300 et 600 rpm.

6. Procédé selon l'une des revendications 1 à 4, **caractérisé en ce que** le traitement mécanique est réalisé dans un malaxeur, cuiseur-mélangeur, mélangeur, co-malaxeur ou extrudeur.

7. Procédé selon l'une des revendications 1 à 6, **caractérisé en ce que** le traitement thermique est maintenu pendant une durée comprise entre 30 secondes et 6 minutes.

8. Procédé selon l'une des revendications 1 à 7, **caractérisé en ce que** le mélange de l'étape b) est refroidi à une température inférieure à 60°C, puis mis en forme par coulage, dosage ou moulage.

9. Procédé selon l'une des revendications 1 à 8, **caractérisé en ce que** le mélange de l'étape b) est mis en forme par coulage, dosage ou moulage, puis refroidi à une température inférieure à 60°C.

10. Procédé selon l'une des revendications 1 à 9, **caractérisé en ce que** le produit obtenu à l'étape b) est mis en forme par moulage traditionnel à la main puis refroidi à une température inférieure à 15°C.

11. Procédé selon l'une des revendications 1 à 10, dans lequel on incorpore dans le mélange des ingrédients d'origine végétale ou animale autre qu'un fromage et/ou des aromates.

12. Procédé selon l'une des revendications 1 à 11 dans lequel on ajoute dans le mélange de départ des matières grasses d'origine animale ou végétale supplémentaires.

13. Procédé selon l'une des revendications 1 à 8, **caractérisé en ce que** les matières premières fromagères de départ sont éventuellement écroûtées, râpées en brins, broyées ou découpées en morceaux de taille comprise entre 1 et 10 cm.

14. Procédé selon l'une des revendications 1 à 8, dans lequel on réalise un foisonnement de la pâte fromagère après l'étape de refroidissement.

15. Produits fromagers de texture homogène, élastique, plastiquée, aptes à être tranchés ou croqués et présentant un taux de peptisation inférieur ou égal à 80 % du taux de peptisation initial du mélange de fromages, susceptibles d'être obtenus par un procédé selon les revendications 1 à 14.

## Claims

1. Method for producing cheese products having living flora, **characterised in that** it comprises the following steps:
a) formation of a mixture comprising at least 10% of at least one melted cheese and at least one natural cheese having a dry extract of more than 45%, the proportion of the natural cheese being at most 90%;
b) thermal treatment at a temperature less than 70°C and mechanical treatment with low shear in order to achieved limited destructuring of the protein matrix of the cheese base obtained;
c) shaping of the cheese base obtained in the preceding step, possibly before or after cooling of the cheese base; and
d) conditioning of the product obtained.

2. Method according to claim 1, **characterised in that** the mixture contains from 10 to 90%, advantageously from 10 to 50% by weight of at least one melted cheese.

3. Method according to claim 1, **characterised in that** the mixture contains from 10 to 90%, advantageously from 20 to 90% by weight of at least one natural cheese having a dry extract higher than 45%.

4. Method according to one of claims 1 to 3, **characterised in that** the mixture contains from 0 to 20% by weight of added water.

5. Method according to one of claims 1 to 4, **characterised in that** the mechanical treatment is conducted in a cutter-type machine with a stirring speed in the range of between 250 and 1200 rpm, preferably between 300 and 600 rpm.

6. Method according to one of claims 1 to 4, **characterised in that** the mechanical treatment is conducted in a kneader, cooker-mixer, mixer, co-kneader or extruder.

7. Method according to one of claims 1 to 6, **characterised in that** the thermal treatment is conducted for a period ranging between 30 seconds and 6 minutes.

8. Method according to one of claims 1 to 7, **characterised in that** the mixture of step b) is cooled to a temperature of less than 60°C, then shaped by pouring, apportioning or moulding.

9. Method according to one of claims 1 to 8, **characterised in that** the mixture of step b) is shaped by pouring, apportioning or moulding, then cooled to a temperature of less than 60°C.

10. Method according to one of claims 1 to 9, **characterised in that** the mixture of step b) is shaped by traditional moulding by hand, then cooled to a temperature of less than 15°C.

11. Method according to one of claims 1 to 10, in which ingredients of vegetable or animal origin other than a cheese and/or aromatics are incorporated into the mixture.

12. Method according to one of claims 1 to 11, in which additional fats of animal or vegetable origin are added to the starting mixture.

13. Method according to one of claims 1 to 8, **characterised in that** the starting cheese raw materials are possibly sliced, finely grated, ground or cut into pieces between 1 and 10 cm in size.

14. Method according to one of claims 1 to 8, in which a bulking of the cheese paste is performed after the cooling step.

15. Cheese products with a homogeneous, elastic, pliant texture suitable for being cut or crumbled and having a peptisation rate of less than or equal to 80% of the initial peptisation rate of the mixture of cheeses that can be obtained by a method according to claims 1 to 14.

## Patentansprüche

1. Verfahren zur Herstellung von Käseprodukten mit einer lebenden Flora, **dadurch gekennzeichnet, dass** es die folgenden Schritte umfasst:
a) Zubereitung einer Mischung, die wenigstens 10 % wenigstens eines Schmelzkäses und wenigstens einen Naturkäse mit einem Trockenextrakt von mehr als 45 % umfasst, wobei der Anteil des Naturkäses höchstens 90 % beträgt;
b) Thermische Behandlung bei einer Temperatur unter 70 C° und mechanische Behandlung unter schwacher Scherung, um eine begrenzte Destrukturierung des Proteingitters der hergestellten Käsemasse zu erhalten;
c) Formung der im vorhergehenden Schritt erhaltenen Käsemasse, eventuell vor oder nach Abkühlung der Käsemasse: und
d) Verpackung des hergestellten Produkts.

2. Verfahren nach Anspruch 1, **dadurch gekennzeichnet, dass** die Mischung 10 bis 90 Gew.-%, vorteilhafterweise 10 bis 50 Gew.-% wenigstens eines Schmelzkäses umfasst.

3. Verfahren nach Anspruch 1, **dadurch gekennzeichnet, dass** die Mischung 10 bis 90 Gew.-%, vorteilhafterweise 20 bis 90 Gew.-% wenigstens eines Naturkäses mit einem Trockenextrakt von mehr als 45 % umfasst.

4. Verfahren nach einem der Ansprüche 1 bis 3, **dadurch gekennzeichnet, dass** die Mischung 0 bis 20 Gew.-% zugesetztes Wasser umfasst.

5. Verfahren nach einem der Ansprüche 1 bis 4, **dadurch gekennzeichnet, dass** die mechanische Behandlung in einem Gerät des Typs Cutter erfolgt, mit einer zwischen 250 und 1200 U/min, vorzugsweise 300 und 600 U/min enthaltenen Rührgeschwindigkeit.

6. Verfahren nach einem der Ansprüche 1 bis 4, **dadurch gekennzeichnet, dass** die mechanische Behandlung in einem Kneter, Kocher-Mischer, Mischer, Co-Verkneter bzw. Doppelschneckenkneter oder Extrudierer realisiert wird.

7. Verfahren nach einem der Ansprüche 1 bis 6, **dadurch gekennzeichnet, dass** die thermische Behandlung während einer Dauer aufrechterhalten wird, die enthalten ist zwischen 30 Sekunden und 6 Minuten.

8. Verfahren nach einem der Ansprüche 1 bis 7, **dadurch gekennzeichnet, dass** die Mischung des Schritts b) abgekühlt wird auf eine Temperatur unter 60°C, dann geformt wird durch Gießen, Dosieren oder Abformen.

9. Verfahren nach einem der Ansprüche 1 bis 8, **dadurch gekennzeichnet, dass** die Mischung des Schritts b) geformt wird durch Gießen, Dosieren oder Abformen, dann abgekühlt wird auf eine Temperatur unter 60°C.

10. Verfahren nach einem der Ansprüche 1 bis 9, **dadurch gekennzeichnet, dass** das in Schritt b) erhaltene Produkt geformt wird durch traditionelles Abformen von Hand, dann abgekühlt wird auf eine Temperatur unter 15 °C.

11. Verfahren nach einem der Ansprüche 1 bis 10, bei dem man der Mischung Zutaten pflanzlicher oder anderer als von einem Käse stammender tierischer Herkunft und/oder Geschmacksstoffe beimischt.

12. Verfahren nach einem der Ansprüche 1 bis 11, bei dem man der Ausgangsmischung zusätzliche Fette tierischer oder pflanzlicher Herkunft beimischt.

13. Verfahren nach einem der Ansprüche 1 bis 8, **dadurch gekennzeichnet, dass** die Käseausgangsrohstoffe eventuell entrindet, zu Stückchen zerrieben, vermahlen oder in zwischen 1 und 10 cm enthaltene Stücke zerlegt wird.

14. Verfahren nach einem der Ansprüche 1 bis 8, bei dem man nach dem Abkühlungsschritt eine Zunahme der Käsemasse bewirkt.

15. Käseprodukt von homogener, elastischer, plastischer Textur, scheibenschnitt-und bissfest und mit einem Peptisationsgrad gleich oder unter 80 % des Anfangspeptisationsgrads der Käsemischung, herstellbar nach einem Verfahren nach einem der Ansprüche 1 bis 14.
